# FASCICULE DE BREVET EUROPEEN

(11) **EP 0 483 006 B1**
(45) Date de publication et mention de la délivrance du brevet: **08.06.1994**
(21) Numéro de dépôt: 91402835.2
(22) Date de dépôt: 23.10.1991
(51) Int. Cl.: A23N 15/00

(54) **Etrogneuse pour végétaux du type brocolis**
Maschine zum Entstrunken von Gemüsen wie Broccoli
Stalk removing apparatus for vegetables like broccoli

(30) Priorité: 26.10.1990 FR 9013317
(43) Date de publication de la demande: 29.04.1992
(73) Titulaire: Turatti, Antonio, F-49650 Allonnes (FR)
(72) Inventeur: Turatti, Antonio, F-49650 Allonnes (FR)
(74) Mandataire: Phélip, Bruno

(56) Documents cités:
- FR-A- 813 818
- FR-A- 2 116 868
- US-A- 3 646 977
- US-A- 4 658 714
- US-A- 4 773 324

## Description

La présente invention se rapporte à une étrogneuse pour végétaux, et elle concerne plus particulièrement une étrogneuse pour brocolis.

L'étrogneuse selon l'invention coupe et sépare toutes les fleurettes des pieds ou tiges de brocolis. Ces fleurettes sont ensuite dirigées automatiquement sur un tapis qui les transporte sur la ligne de production, les pieds ou tiges étant évacués dans une autre direction.

Selon une caractéristique essentielle de l'invention, la mise en fleurettes et le parage des pieds ou tiges des brocolis est entièrement automatisé.

Le développement de la consommation des végétaux ayant une tige ou pied portant un bouquet de fleurettes pose le problème de la coupe de ces fleurettes, qui sont destinées à être consommées. Pour cela, on connaît des procédés entièrement manuels, qui présentent l'inconvénient de nécessiter un nombreux personnel avec un coût de réalisation extrêmement élevé.

On connaît également des systèmes d'alimentation par translation de brocolis, qui passent devant un ou deux couteaux animés d'un mouvement de rotation autour de leur axe. Chacun de ces couteaux vient couper ainsi les brocolis pour séparer la tige des fleurettes. On observe que dans ces types d'installation rudimentaire, la coupe de la tige ou pied par rapport aux fleurettes se fait toujours de la même façon. De ce fait, ce genre de machine présente l'inconvénient de donner des fleurettes qui sont mal coupées, et qui doivent être reprises manuellement. Ainsi les machines de ce genre ont une productivité relativement faible, et fournissent des fleurettes de mauvaise qualité.

Selon le brevet américain US-4.658.714, on connaît des systèmes de machines entraînant en rotation des végétaux montés perpendiculairement à l'axe d'une table rotative. Ces végétaux sont fixes en rotation autour de l'axe de leur support, durant leur déplacement devant des couteaux fixes destinés à préparer des coupes en quartier de ce végétal.

Le but de la présente invention est de proposer une étrogneuse à végétaux du type brocolis, qui permette d'étêter complètement chacun des brocolis à l'aide d'une seule machine entièrement automatique, et cela dans un temps le plus réduit possible, tout en respectant la totalité des fleurettes à récupérer, et en éliminant que la tige ou le pied de celles-ci.

L'invention est revendiquée dans la revendication 1 et a pour objet une étrogneuse pour végétaux de type brocolis qui est constituée par une structure supportant un plateau tournant. Des systèmes de tenue de végétal sont montés dans ce plateau tournant, de manière que chacun de ces systèmes de tenue de végétal soient libres en rotation autour de son axe de manière à pouvoir être animés d'un mouvement de rotation autour de cet axe par un dispositif d'entraînement en rotation.

Selon l'invention, ce dispositif d'entraînement en rotation agit pendant une fraction de chaque tour du plateau tournant, et simultanément ce temps, un couteau, qui est associé au système de tenue de végétal correspondant, est amené par un système de commande contre ledit végétal de façon à l'étêter à la coupe voulue. Plus précisément le système de commande de chacun des couteaux comporte un dispositif à came, dans lesquels la came est portée par la structure de la machine.

De plus selon l'invention, chaque système de tenue de végétal coopère avec un ensemble de blocage en position, qui agit après que le plateau tournant ait effectué la fraction de tour, pendant laquelle le système de tenue de végétal est lui-même animé d'un mouvement de rotation autour de son axe. L'ensemble de blocage en position agit alors sur le système de tenue de végétal correspondant pour le mettre en position de chargement et le maintenir dans cette position, c'est-à-dire la position dans laquelle l'ouverture d'engagement est dirigée radialement vers l'extérieur du plateau tournant. Plus précisément, chaque ensemble de blocage en position d'un système de tenue de végétal est monté directement sur ce système de tenue de végétal.

Ainsi l'étrogneuse selon l'invention présente la caractéristique essentielle de faire tourner le végétal sur lui-même, et de déplacer à la position désirée un couteau de manière à étêter correctement toutes les fleurettes dudit végétal.

Selon un mode de réalisation de l'invention, la structure de l'étrogneuse supporte :
- un mât central vertical, qui est entraîné par un moto-réducteur, et qui est solidaire du plateau tournant sensiblement horizontal, et portant les systèmes de tenue de végétal à axe vertical, et les systèmes de commande des couteaux ;
- la came des couteaux, qui est disposée circulairement de manière à correspondre à la position radiale par rapport au plateau tournant des systèmes de tenue de végétal ;
- le dispositif d'entraînement en rotation des systèmes de tenue de végétal.

Plus précisément, le mât central est maintenu par deux paliers, un palier inférieur et un palier supérieur qui sont fixés à la structure. Le plateau tournant est constitué par un moyeu portant des bras, qui sont raccordés les uns aux autres par une couronne de forme sensiblement circulaire. Chaque bras se prolonge à l'extérieur de cette couronne par une extrêmité, qui supporte le système de tenue de végétal correspondant.

Avantageusement, le dispositif d'entraînement en rotation des systèmes de tenue de végétal comporte une courroie d'entraînement, qui est mise en mouvement par une poulie motrice d'axe vertical. Cette poulie motrice est raccordée à un motovariateur. La courroie d'entraînement vient s'appliquer tangentiellement à l'extérieur de poulies qui sont chacune solidaires d'un système de tenue de végétal correspondant. Cette courroie d'entraînement vient s'appliquer sur une de ces poulies au moment où cette poulie, qui est entraînée par le plateau tournant, rentre dans la zone d'action de la courroie d'entraînement. Cette zone d'action correspond à la fraction de chaque tour pendant laquelle le système de tenue de végétal correspondant doit tourner autour de son axe. Plus précisément, la poulie motrice est disposée à l'intérieur de la courroie d'entraînement et elle est maintenue en place par deux poulies folles. Ces deux poulies folles sont disposées symétriquement par rapport au plan longitudinal de la machine, c'est-à-dire celui passant par l'axe du plateau tournant, et par l'axe de la poulie motrice. Ces deux poulies folles à axe vertcial sont montées dans la structure à l'extérieur du débattement circulaire des système de tenue des végétaux, de façon que leur distance par rapport à la poulie motrice dans le sens parallèle au plan longitudinal, soit déterminée de manière que l'entraînement en rotation des systèmes de tenue des végétaux autour de leur axe s'effectue pendant la fraction de tour du plateau tournant demandée.

De façon préférentielle, chaque système de tenue de végétal comporte une pince, qui est portée par la poulie correspondante au moyen de colonnes de soutien. La poulie est solidaire d'un arbre, qui est disposé à sa partie supérieure de l'autre côté de la pince. Cet arbre est monté dans le plateau tournant au moyen d'un support, qui est porté par l'extrêmité du bras correspondant, de façon que l'arbre puisse tourner librement par rapport à son axe. Avantageusement, chacun de ces supports comporte deux paliers de tenue de l'arbre de poulie.

Selon l'invention, la courroie d'entraînement pourra comporter au moins une courroie trapèzoïdale. Cette courroie trapèzoïdale s'engage alors dans une gorge trapèzoïdale de la poulie motrice, et dans une gorge trapèzoïdale de chacune des deux poulies folles du dispositif d'entraînement, ainsi que dans une gorge trapèzoïdale de chacune des poulies des systèmes de tenue de végétal concernées.

De façon préférentielle, chacune des pinces des systèmes de tenue de végétal comprend un système de deux leviers, qui sont disposés symétriquement par rapport à un plan passant par l'axe de la poulie. Chacun de ces leviers est monté dans le corps de la pince au moyen d'un axe d'articulation sensiblement vertical, de façon à avoir un grand côté dont l'extrêmité porte une mâchoire de préhension du végétal et un petit côté dont l'extrêmité est constituée par un doigt. Ce doigt s'engage dans l'encoche d'une came, qui est actionnée par un système de manoeuvre. Grace à ce système de manoeuvre, la came peut être animée d'un mouvement de translation suivant son propre axe, de manière à agir sur chacun des doigts des leviers par la face correspondante de l'encoche concernée, pour faire tourner le petit côté de chacun des leviers autour de son axe d'articulation, afin d'écarter ou de rapprocher les deux mâchoires des deux leviers l'une par rapport à l'autre.

Dans cette configuration de l'invention, le système de manoeuvre est constitué par un vérin pneumatique à double effet, qui est alimenté par une canalisation raccordée à un joint tournant. Le circuit d'alimentation du vérin pneumatique comporte plus précisément un distributeur à commande électrique, qui est actionné par un interrupteur. Cet interrupteur électrique est commandé par une came, qui est montée sur la structure de l'étrogneuse.

Avantageusement selon l'invention, chaque couteau est monté à l'extérieur du plateau tournant, et le système de commande de couteau comporte un vérin, qui est solidaire d'un mandrin porte-couteau. Ce vérin coopère avec le dispositif à came, dont la came est portée directement par la structure de l'étrogneuse. Plus précisément, le vérin comporte un corps dans lequel coulisse une tige qui est solidaire d'un galet de commande. Ce galet de commande est en contact permanent avec la came. La tige porte un piston qui coulisse dans le corps, et qui est poussé par un ressort de rappel monté dans ce corps, et s'appuyant sur le fond dudit corps, de manière à appuyer constamment le galet de commande contre la came.

De façon préférentielle selon l'invention , le vérin est monté à l'extérieur de la couronne du plateau tournant, au moyen d'une plaque intermédiaire. Cette plaque intermédiaire est munie de deux lumières circulaires qui coopèrent avec des moyens de fixation sur la couronne, afin d'obtenir un réglage de la position du vérin par rapport au plateau tournant.

Selon un mode particulier de l'invention, chaque ensemble de blocage en position du système de tenue de végétal correspondant comprend un doigt, dont l'axe est parallèle à l'arbre de la poulie du système de tenue. Ce doigt s'engage dans une encoche circulaire qui est aménagée sur la face supérieure de la poulie. De plus le doigt est porté par le plateau tournant, et actionné par un système à came, dont la came est portée directement par la structure. Plus précisément, le doigt est solidaire d'un vérin qui est actionné par le système à came, et le vérin est porté par le support de l'arbre de la poulie.

Plus précisément, le vérin comporte un corps dans lequel coulisse une tige, qui est solidaire d'un galet de commande en contact permanent avec la came. La tige porte un piston, qui coulisse dans le corps et qui est poussé par un ressort de rappel. Le ressort de rappel est monté dans le corps, et s'appuie sur le fond de ce corps, de manière à appuyer constamment le galet de commande contre la came.

De plus et afin d'améliorer le fonctionnement du système de blocage selon l'invention, l'encoche circulaire comporte une face d'appui du doigt qui est inclinée par rapport à la face supérieure de la poulie, de manière à avoir une pente d'engagement.

Selon l'invention, l'étrogneuse comporte de plus un couteau horizontal qui est monté sur la structure en sortie de la zone d'action de la courroie d'entraînement.

Le procédé pour étêter des végétaux du type brocolis, selon l'invention telle qu'elle est caractérisée dans la revendication 23;, consiste :
- à disposer la tige de végétal sur un système de tenue de manière à ce que ladite tige soit sensiblement parallèle à l'axe dudit système de tenue, qui est monté sur un plateau tournant, supporté par une structure 1 d'une étrogneuse pour végétaux; l'axe du système de tenue étant sensiblement parallèle à l'axe du plateau tournant; ladite tige de végétal étant placée entre les mâchoires des leviers de la pince du système de tenue de végétal qui est immobilisé en rotation autour de son axe par l'ensemble de blocage en position de chargement, c'est-à-dire avec son ouverture d'engagement dirigée radialement vers l'extérieur du plateau tournant, les mâchoires étant en position ouverte sous l'action du système de manoeuvre;
- à rapprocher les mâchoires contre la tige du végétal sous l'action du système de manoeuvre de manière à tenir le végétal dans la pince correspondante;
- en ce que le végétal avec son système de tenue se déplacent avec le plateau tournant jusqu'au début de la zone d'entraînement en rotation, et que simultanément l'ensemble de blocage laisse libre en rotation le système de tenue de végétal autour de son axe, sous l'action de la came;
- en ce que le végétal, son système de tenue et un couteau associé à chaque système de tenue de végétal correspondant pénètrent dans la zone d'entraînement en rotation, et que simultanément une came commande le mouvement du couteau correspondant, de manière à étêter le végétal pendant tout le déplacement du système de tenue dans cette zone, les fleurettes tombant sur un tapis roulant;
- à dégager et remonter le couteau en fin de parcours dans la zone d'entraînement en rotation, et à commander un couteau horizontal qui vient couper la ou les fleurettes centrales de la tige;
- en ce que le végétal et son système de tenue sortent de la zone d'entraînement en rotation, et que sous l'action du système de manoeuvre, les mâchoires s'ouvrent pour laisser tomber la tige restante sur un tapis roulant;
- en ce que l'ensemble de blocage en position vient immobiliser en rotation le système de tenue de végétal autour de son axe, sous l'action de la came, de façon à placer ledit système de tenue de végétal en position de chargement.

L'étrogneuse pour végétaux du type brocolis selon l'invention, présente ainsi l'avantage de séparer correctement les fleurettes de la tige de chaque brocolis. De plus, la machine selon l'invention permet de réaliser ces opérations de façon entièrement automatique avec une productivité extrêmement élevée qui est de l'ordre de 2 400 à 2 800 pièces à l'heure. Ceci permet d'avoir un coût de réalisation extrêmement faible par rapport aux autres moyens de réalisation connus.

D'autres avantages ressortiront de l'invention, qui sera mieux comprise à l'aide de la description donnée ci-dessous d'exemples particuliers de réalisation, d'écrits à titre non limitatif, en référence aux dessins annexés sur lesquels :
- la Figure 1 est une vue schématique en élévation de l'ensemble de l'étrogneuse à végétaux selon l'invention ;
- la Figure 2 est une vue de dessus schématique suivant le plan II-II de la Figure 1 ;
- la Figure 3 est une vue schématique suivant le plan III-III de la Figure 2 ;
- la Figure 4 est une vue du détail de l'ensemble d'un système de tenue de végétal selon l'invention, avec son système de commande de couteau ;
- la Figure 5 est une coupe partielle suivant le plan V-V de la Figure 4 ;
- la Figure 6 est une vue en perspective du système de pince selon l'invention ;
- la Figure 7 est une vue en perspective de l'ensemble d'un système de tenue de végétal correspondant à la Figure 4 ;
- la Figure 8 est une coupe suivant le plan VIII-VIII de la Figure 5.

L'étrogneuse pour végétaux, qui sont plus particulièrement des brocolis, est constituée essentiellement par une structure 1, qui supporte un plateau tournant 6 dans lequel sont montés des systèmes de tenue de végétal. Chacun de ces systèmes de tenue de végétal est monté dans le plateau tournant 6, de manière à être libre en rotation autour de son axe. La structure 1 comporte également un dispositif d'entraînement en rotation de chacun des systèmes de tenue de végétal autour de leur axe. Le dispositif d'entraînement en rotation agit de façon intermittente sur chacun des systèmes de tenue de végétal, c'est-à-dire pendant une fraction de chaque tour du plateau tournant. Durant cette fraction de tour du plateau tournant 6, un couteau 23, qui est associé au système de tenue de végétal correspondant, est amené par un système de commande contre le végétal de façon à l'étêter à la coupe voulue.

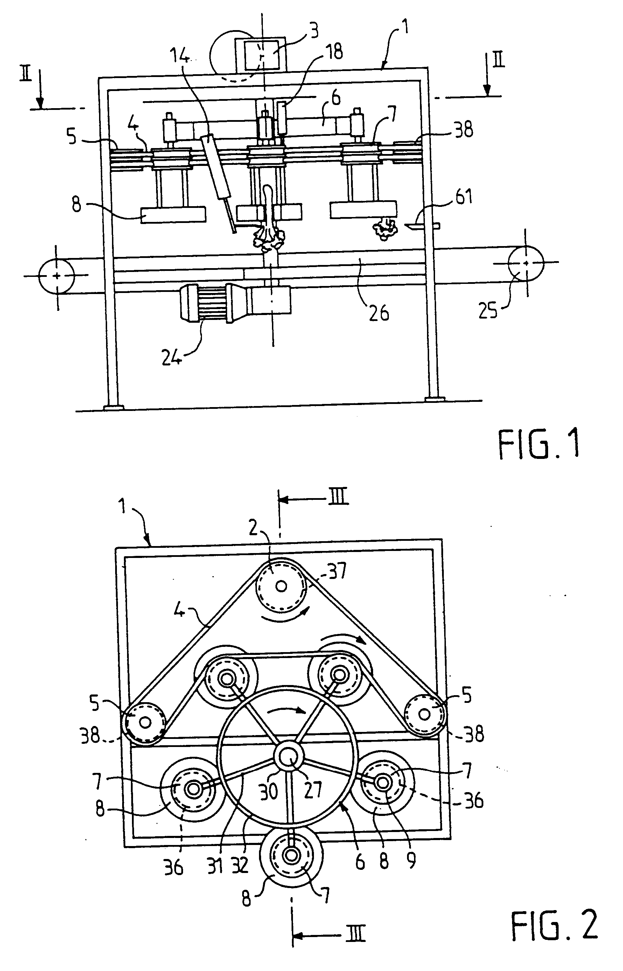

Comme on peut le voir schématiquement sur les figures 1, 2 et 3, l'étrogneuse comporte essentiellement des systèmes de tenue de végétal, qui sont entraînés en rotation par le plateau tournant 6, un dispositif d'entraînement en rotation de ces systèmes de tenues, des couteaux 23 avec leur système de commande, chacun de ces couteaux et de ce système de commande étant associés à un système de tenue de végétal correspondant. Chaque système de commande de couteau 23 comporte un dispositif à came 13, qui agit pendant une fraction de tour durant laquelle le dispositif d'entraînement en rotation agit sur le système de tenue de végétal correspondant. La came 13 est portée directement par la structure 1 de la machine.

Afin de pouvoir monter convenablement chaque végétal dans son système de tenue, un ensemble de blocage en position est associé à chaque système de tenue de végétal. Ainsi après la fraction de tour du plateau tournant 6, pendant laquelle le système de tenue du végétal correspondant est lui-même animé d'un mouvement de rotation autour de son axe, l'ensemble de blocage en position agit sur le système de tenue de végétal pour le mettre en position de chargement et le maintenir dans cette position. La machine étant chargée par l'extérieur, cette position de chargement correspond à placer son ouverture d'engagement radialement vers l'extérieur du plateau tournant 6.

La structure 1 est un ensemble de piliers et de poutres qui supportent un mât central 27 vertical solidaire du plateau tournant 6 et le dispositif d'entraînement en rotation des systèmes de tenue de végétal. La structure 1 supporte également la came 13 des dispositifs à came correspondant à chacun des systèmes de commande des couteaux 23. La came 13 est disposée circulairement au-dessus du plateau tournant 6, de manière à correspondre à la position radiale de chacun des systèmes de tenue de végétal par rapport au plateau tournant 6.

Le mât central 27 vertical est entraîné par un moto-réducteur 24 et il porte le plateau tournant 6 qui est sensiblement horizontal. Le mât central 27 est tenu par deux paliers, un palier inférieur 28, et un palier supérieur 29, qui sont fixés l'un et l'autre à la structure de la machine.

Le plateau tournant 6 est constitué par un moyeu 30, qui porte des bras 31. Ces bras 31 sont raccordés les uns aux autres par une couronne 32 de forme sensiblement circulaire. Chaque bras 31 se prolonge à l'extérieur de cette couronne 32 par une extrêmité 33, qui supporte le système de tenue de végétal correspondant. Le plateau tournant 6 est relié au mât central 27 par son moyeu 30, qui est solidaire dudit mât central 27. Les systèmes de commande de chacun des couteaux 23 sont montés directement sur le plateau tournant 6, au voisinage de chacun des systèmes de tenue de végétal correspondant.

Le dispositif d'entraînement en rotation des systèmes de tenue de végétal comporte une courroie 4 d'entraînement, qui agit sur chacun des systèmes de tenue de végétal, lorsque celui-ci pénètre dans la zone d'action de ladite courroie 4 d'entraînement, c'est-à-dire la zone qui correspond à la fraction de chaque tour pendant laquelle le système de tenue de végétal correspondant doit tourner autour de son propre axe. La courroie 4 d'entraînement est mise en mouvement par une poulie motrice 2 d'axe vertical qui est supporté par la structure 1. Cette poulie motrice 2 est entraînée par un motovariateur 3. Chacun des systèmes de tenue de végétal comprend une poulie 7, qui est solidaire dudit système de tenue de végétal, et sur laquelle vient s'appliquer tangentiellement à l'extérieur de ladite poulie 7 la courroie 4 d'entraînement. Cette courroie 4 d'entraînement vient s'appliquer sur la poulie 7 d'un système de tenue de végétal, au moment où cette poulie 7, qui est entraînée par le plateau tournant 6, pénètre dans la zone d'action de la courroie 4 d'entraînement.

La poulie motrice 2 est disposée à l'intérieur de la courroie 4 d'entraînement, qui est maintenue en place sur la structure par deux poulies folles 5. Chacune de ces deux poulies folles 5 est disposée sur la structure 1 symétriquement par rapport au plan longitudinal de la machine. Ce plan longitudinal passe par l'axe du plateau tournant 6, et par l'axe de la poulie motrice 2. De plus, les deux poulies folles 5 à axe vertical sont montés dans la structure 1 à l'extérieur du débattement circulaire des systèmes de tenue des végétaux. Ces poulies folles 5 sont situées de manière que leur distance par rapport à la poulie motrice 2 dans le sens parallèle au plan longitudinal de la machine, soit déterminée de manière que l'entraînement en rotation des systèmes de tenue des végétaux autour de leur propre axe s'effectue pendant la fraction de tour du plateau tournant demandée.

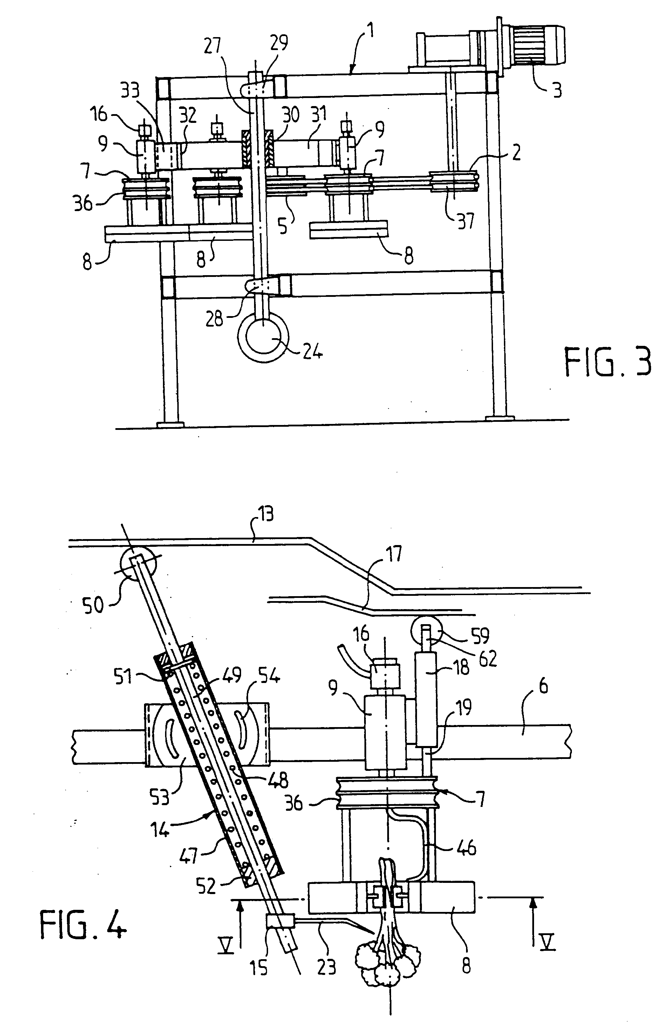

La courroie d'entraînement 4 est constituée par deux courroies trapèzoïdales, qui s'engagent dans deux gorges de section conjuguée, qui sont aménagées sur chacune des poulies 7 des systèmes de tenue de végétal, sur la poulie motrice 2 et sur les poulies folles 5. Ainsi comme on peut le voir notamment sur les Figures 2 et 3, les courroies trapèzoïdales s'engagent dans des gorges 37 aménagées sur la poulie motrice 2, dans des gorges 38 aménagées sur les deux poulies folles 5, et dans des gorges 36 aménagées sur chacune des poulies 7 des systèmes de tenue des végétaux.

La structure 1 supporte également deux dispositifs de tapis roulant référencés respectivement 25 et 26. Le tapis roulant 25 est destiné à récupérer les fleurettes des brocolis, tandis que le tapis roulant 26 non représenté sur les Figures, est destiné à recevoir les tiges des brocolis.

Chaque ensemble de blocage en position du système de tenue de végétal correspondant est monté sur le plateau tournant 6, et suivant le mode de réalisation représenté sur les Figures, il est monté directement sur le système de tenue de végétal. Les ensembles de blocage en position des systèmes de tenue de végétaux sont actionnés par un système à came 17, qui est monté directement sur la structure 1.

Chacun des systèmes de tenue de végétal comporte une pince référencée 8 dans son ensemble, qui est solidaire de la poulie 7 correspondante, et qui est actionnée par un système de manoeuvre commandé par une came 21. La came 21 des différents systèmes de manoeuvre des pinces 8 est montée directement sur la structure 1 de la machine.

La structure 1 comporte ainsi trois cames : la came 13 qui agit sur les systèmes de commande des couteaux, la came 17 qui agit sur les ensembles de blocage des systèmes de tenue de végétal, et la came 21 qui agit sur chacun des systèmes de manoeuvre d'ouverture ou de fermeture de la pince 8 du végétal. Ainsi chacun des systèmes de tenue de végétal a son système de commande du couteau, son ensemble de blocage, et son système de manoeuvre de la pince 8, qui sont actionnés par les différentes cames 13, 17 et 21, suivant la position circulaire de ce système de tenue de végétal par rapport à l'axe du mât central 27.

Chaque système de tenue de végétal comporte sa pince 8 qui est portée par la poulie 7 correspondante au moyen de colonnes de soutien 34. Cette poulie 7 est solidaire d'un arbre 35, qui est disposé à sa partie supérieure de l'autre côté de la pince 8. L'arbre 35 est monté dans le plateau tournant 6 au moyen d'un support 9. Ce support 9 est porté par l'extrêmité 33 du bras 31 correspondant, de façon que l'arbre 35 puisse tourner librement par rapport à son axe. Pour cela, le support 9 comporte deux paliers de tenue de l'arbre 35 qui peuvent être par exemple des paliers à roulement à billes.

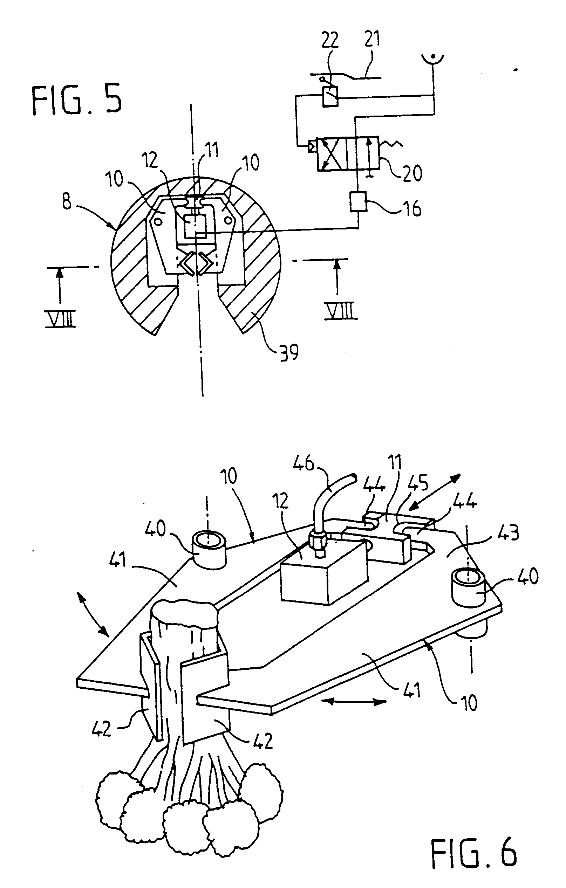

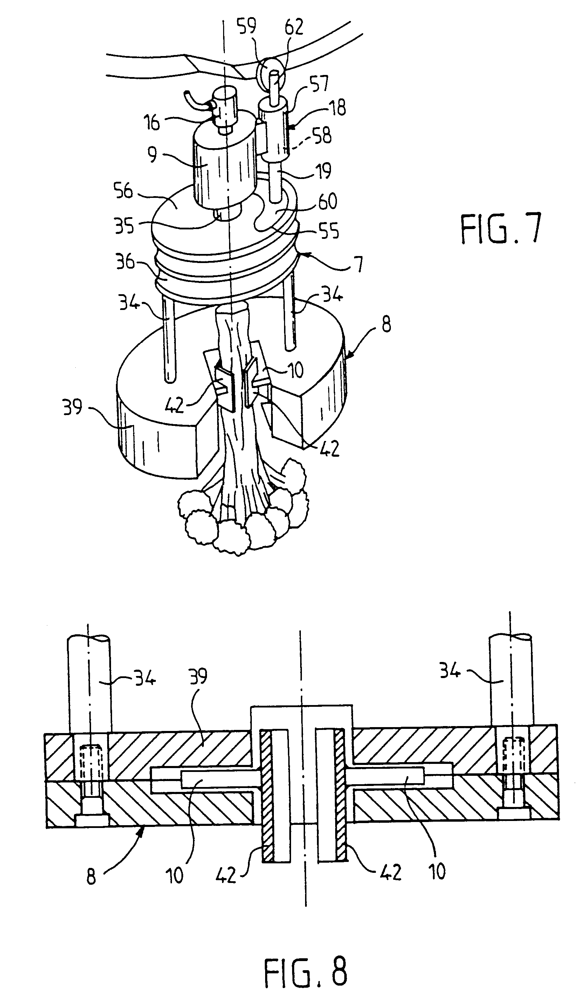

Les différents détails de chaque système de tenue de végétal sont représentés sur les Figures 4 et 7, tandis que tous les détails relatifs à la pince 8 et à son système de manoeuvre sont représentés sur les Figures 5, 6 et 8. La pince 8 comprend un système de deux leviers 10, qui sont disposés symétriquement par rapport à un plan passant par l'axe de la poulie 7. Chaque levier 10 est monté dans le corps 39 de la pince au moyen d'un axe d'articulation 40, qui est sensiblement vertical. Chacun des leviers 10 a ainsi un grand côté 41 et un petit côté 43. Le grand côté 41 a son extrêmité qui porte une mâchoire 42 de préhension du végétal, et le petit côté 43 a une extrêmité qui est constituée par un doigt 44. Ce doigt 44 s'engage dans une encoche 45 aménagée dans une came 11. Le système de manoeuvre actionne cette came 11, de manière qu'une translation de ladite came 11 suivant son propre axe, agisse sur le doigt 44 de chacun des leviers 10 par la face correspondante de l'encoche 45. De cette manière, la came 11 fait tourner le petit côté 43 du levier 10 autour de son axe d'articulation 40, afin d'écarter ou de rapprocher les deux mâchoires 42 des deux leviers 10 l'une par rapport à l'autre.

Le système de manoeuvre de la came 11 est constitué par un vérin pneumatique 12, qui est alimenté par une canalisation 46 raccordée à un joint tournant 16, comme on peut le voir sur les Figures 4 et 6. Plus précisément, comme cela est représenté sur la Figure 5, le circuit d'alimentation du vérin pneumatique 12 comporte un distributeur 20 à commande électrique actionné par un interrupteur 22. Cet interrupteur 22 est lui-même commandé par la came 21, qui est montée sur la structure 1.

Comme cela a été expliqué précédemment, chacun des couteaux 23 est monté à l'extérieur du plateau tournant 6, et plus précisément sur la couronne 32. Le système de commande de chacun de ces couteaux 23 comporte un vérin 14, qui est solidaire d'un mandrin porte-couteau 15. Ce vérin 14 coopère avec le dispositif à came 13 qui est porté par la structure 1. Le vérin 14 comporte un corps 47 dans lequel coulisse une tige 49, qui est solidaire d'un galet de commande 50 en contact avec la came 13. Cette tige 49 porte un piston 51, qui coulisse dans le corps 47, et qui est poussé par un ressort de rappel 48. Ce ressort de rappel est également monté dans le corps 47 autour de la tige 49, et il s'appuie sur le fond 52 de ce corps 47, de manière à appuyer le galet de commande 50 contre la came 13.

Afin de donner des possibilités de réglage lors du montage du vérin 14 à l'extérieur de la couronne 32 du plateau tournant 6, ce vérin 14 est monté au moyen d'une plaque intermédiaire 53. Cette plaque intermédiaire 53 est elle-même munie de deux lumières 54, qui coopèrent avec des moyens de fixation sur la couronne 32. Ce dispositif supplémentaire permet d'obtenir ainsi un réglage de la position du vérin 14 par rapport au plateau tournant 6, et finalement par rapport au système de tenue de végétal correspondant.

Comme on peut le voir en détail sur les Figures 4 et 7, chaque ensemble de blocage en position du système de tenue de végétal correspondant comprend un doigt 19, qui s'engage dans une encoche circulaire 55 appartenant à la poulie 7. Le doigt 19 a son axe qui est parallèle à l'arbre 35 de la poulie 7, et il est porté par le plateau tournant 6. Ce doigt 19 est actionné par le système à came 17, qui est porté par la structure 1. L'encoche circulaire 55 est aménagée sur la face supérieure 56 de la poulie 7, et elle comporte une face d'appui 60 du doigt 19. Cette face d'appui 60 est inclinée par rapport à la face supérieure 56 de la poulie 7, de manière à avoir une pente d'engagement.

Le doigt 19 est solidaire d'un vérin 18, qui est actionné par le système à came 17, qui est porté par la structure 1. Ce vérin 18 est lui-même porté par le support 9 de l'arbre 35 de la poulie 7. Le vérin 18 comporte un corps 57 dans lequel coulisse une tige 62, qui est solidaire d'un galet de commande 59 en contact avec la came 17. Cette tige 62 porte un piston, qui coulisse dans le corps 57 et qui est poussé par un ressort de rappel 58. Ce ressort de rappel 58 est lui-même monté dans le corps 57, et s'appuie sur le fond dudit corps 57, de manière à appuyer constamment le galet de commande 59 contre la came 17.

De plus selon l'invention, un couteau horizontal 61 est monté sur la structure 1, en sortie de la zone d'action de la couronne d'entraînement, comme on peut le voir sur la Figure 1. Ce couteau horizontal 61 est destiné à venir couper la ou les fleurettes centrales restantes sur les tiges en fin de parcours de la zone d'entraînement en rotation.

Le procédé pour étêter des végétaux du type brocolis, qui utilise la machine selon l'invention écrite ci-dessus, consiste :
- à placer la tige de végétal entre les mâchoires 42 des leviers 10 de la pince 8 du système de tenue de végétal immobilisé en rotation autour de son axe par l'ensemble de blocage en position de chargement, c'est-à-dire avec son ouverture d'engagement dirigée radialement vers l'extérieur du plateau tournant 6, les mâchoires 42 étant en position ouverte sous l'action du système de manoeuvre ;
- à rapprocher les mâchoires 42 contre la tige du végétal sous l'action du système de manoeuvre de manière à tenir le végétal dans la pince 8 ;
- en ce que le végétal avec son système de tenue se déplacent avec le plateau tournant 6 jusqu'au début de la zone d'entraînement en rotation, et que simultanément l'ensemble de blocage laisse libre en rotation le système de tenue de végétal autour de son axe, sous l'action de la came 17 ;
- en ce que le végétal et son système de tenue pénètrent dans la zone d'entraînement en rotation, et que simultanément la came 13 commande le mouvement du couteau 23 correspondant de manière à étêter le végétal pendant tout le déplacement du système de tenue dans cette zone, les fleurettes tombant sur le tapis roulant 25 ;
- à dégager et remonter le couteau 23 en fin de parcours dans la zone d'entraînement en rotation, et à commander un couteau horizontal 61 qui vient couper la ou les fleurettes centrales de la tige ;
- en ce que le végétal et son système de tenue sortent de la zone d'entraînement en rotation, et que sous l'action du système de manoeuvre, les mâchoires 42 s'ouvrent pour laisser tomber la tige restante sur un tapis roulant 26 ;
- en ce que l'ensemble de blocage en position vient immobiliser en rotation le système de tenue de végétal autour de son axe, sous l'action de la came 17, de façon à placer ledit système de tenue de végétal en position de chargement.

## Revendications

1. Etrogneuse pour végétaux du type brocolis constituée par une structure (1) supportant un plateau tournant (6) dans lequel sont montés des systèmes de tenue de végétal, caractérisée en ce que
- chaque système de tenue de végétal a son axe qui est sensiblement parallèle à l'axe du plateau tournant (6);
- chaque système de tenue de végétal est libre en rotation autour de son axe, de manière à pouvoir être animé d'un mouvement de rotation autour de cet axe par un dispositif d'entraînement en rotation agissant pendant une fraction de chaque tour du plateau tournant (6);
- chaque système de tenue de végétal est associé à un couteau (23) qui est porté par le plateau tournant (6), ledit couteau (23) étant fixe en rotation par rapport audit système de tenue de végétal,
- chaque couteau (23) est amené par un système de commande contre ledit végétal animé de mouvement de rotation de façon à l'étêter à la coupe voulue,
- chaque couteau (23) agissant pendant l'action du dispositif d'entraînement en rotation du système de tenue de végétal correspondant.

2. Etrogneuse selon la revendication 1, caractérisée en ce que le système de commande du couteau (23) comporte un dispositif à came (13), ladite came (13) étant portée par la structure (1) de la machine.

3. Etrogneuse selon la revendication 1, caractérisée en ce que chaque système de tenue du végétal coopère avec un ensemble de blocage en position, de manière qu'après la fraction de tour du plateau tournant (6) pendant laquelle le système de tenue du végétal est lui-même animé d'un mouvement de rotation autour de son axe, le système de tenue de végétal soit mis en position de chargement et maintenu dans cette position, c'est-à-dire avec son ouverture d'engagement dirigée radialement vers l'extérieur du plateau tournant (6).

4. Etrogneuse selon la revendication 3, caractérisée en ce que chaque ensemble de blocage en position du système de tenue de végétal correspondant est monté directement sur ledit système de tenue de végétal.

5. Etrogneuse selon la revendication 2, caractérisée en ce que la structure (1) supporte:
- un mât central (27) vertical qui est entraîné par un moto-réducteur (24), et qui est solidaire du plateau tournant (6) sensiblement horizontal, ledit plateau tournant (6) portant les systèmes de tenue de végétal à axe vertical, et les systèmes de commande des couteaux (23) ;
- la came (13) des couteaux (23), qui est disposée circulairement de manière à correspondre à la position radiale par rapport au plateau tournant (6) des systèmes de tenue de végétal ;
- le dispositif d'entraînement en rotation des systèmes de tenue de végétal.

6. Etrogneuse selon la revendication 5 caractérisée en ce que :
- le mât central (27) est tenu par deux paliers, un palier inférieur (28), un palier supérieur (29) qui sont fixés à la structure (1) ;
- le plateau tournant (6) est constitué par un moyeu (30) portant des bras (31) raccordés les uns aux autres par une couronne (32) de forme sensiblement circulaire, chaque bras (31) se prolongeant à l'extérieur de cette couronne (32) par une extrêmité (33) supportant le système de tenue de végétal correspondant.

7. Etrogneuse selon la revendication 6 caractérisée en ce que le dispositif d'entraînement en rotation des systèmes de tenue de végétal comporte une courroie (4) d'entraînement, qui est mis en mouvement par une poulie motrice (2) d'axe vertical raccordée à un motovariateur (3), et qui vient s'appliquer tangentiellement à l'extérieur de poulies (7), chaque poulie (7) étant solidaire du système de tenue de végétal correspondant ; ladite courroie (4) d'entraînement venant s'appliquer sur une poulie (7) au moment où cette poulie (7), qui est entraînée par le plateau tournant (6), rentre dans la zone d'action de la courroie (4) d'entraînement, qui correspond à la fraction de chaque tour pendant laquelle le système de tenue de végétal correspondant doit tourner autour de son axe.

8. Etrogneuse selon la revendication 7 caractérisée en ce que la poulie motrice (2) est disposée à l'intérieur de la courroie (4) d'entraînement, qui est maintenue en place par deux poulies folles (5) disposées symétriquement par rapport au plan longitudinal de la machine passant par l'axe du plateau tournant (6) et par l'axe de la poulie motrice (2), ces deux poulies folles (5) à axe vertical étant montées dans la structure (1) à l'extérieur du débattement circulaire des systèmes de tenue des végétaux, de façon que leur distance par rapport à la poulie motrice (2) dans le sens parallèle au plan longitudinal soit déterminée de manière que l'entraînement en rotation des systèmes de tenue des végétaux autour de leur axe s'effectue pendant la fraction de tour du plateau tournant (6) demandée.

9. Etrogneuse selon la revendication 8 caractérisée en ce que chaque système de tenue de végétal comporte une pince (8) portée par une poulie (7) au moyen de colonnes de soutien (34), ladite poulie (7) étant solidaire d'un arbre (35) disposé à sa partie supérieure de l'autre côté de la pince (8) ; ledit arbre (35) étant monté dans le plateau tournant (6) au moyen d 'un support (9) porté par l'extrêmité (33) du bras (31) correspondant, de façon que l'arbre (35) puisse tourner librement par rapport à son axe.

10. Etrogneuse selon la revendication 9 caractérisée en ce que le support (9) comporte deux paliers de tenue de l'arbre (35).

11. Etrogneuse selon l'une des revendications 8 et 9 caractérisée en ce que la courroie (4) d'entraînement comporte au moins une courroie trapèzoïdale, qui s'engage dans une gorge trapèzoïdale (37) de la poulie motrice (2) et dans une gorge trapèzoïdale (38) de chacune des deux poulies folles (5) du dispositif d'entraînement, ainsi que dans une gorge trapèzoïdale (36)de chacune des poulies (7) concernées.

12. Etrogneuse selon la revendication 9 caractérisée en ce que la pince (8) comprend un système de deux leviers (10) disposés symétriquement par rapport à un plan passant par l'axe de la poulie (7), chaque levier (10) étant monté dans le corps (39) de la pince (8) au moyen d'un axe d'articulation (40) sensiblement vertical, de façon à avoir un grand côté (41) dont l'extrêmité porte une mâchoire (42) de préhension du végétal et un petit côté (43) dont l'extrêmité est constituée par un doigt (44) qui s'engage dans l'encoche (45) d'une came (11) actionnée par un système de manoeuvre, de manière qu'une translation de la came (11) suivant son propre axe agisse sur le doigt (44) par la face correspondante de l'encoche (45), pour faire tourner le petit côté (43) du levier (10) autour de son axe d'articulation (40) afin d'écarter ou de rapprocher les deux mâchoires (42) des deux leviers (10) l'une par rapport à l'autre.

13. Etrogneuse selon la revendication 12 caractérisée en ce que le système de manoeuvre est constitué par un vérin pneumatique (12) à double effet alimenté par une canalisation (46) raccordée à un joint tournant (16).

14. Etrogneuse selon la revendication 13 caractérisée en ce que le circuit d'alimentation du vérin pneumatique (12) comporte un distributeur (20) à commande électrique actionné par un interrupteur (22) commandé par une came (21) montée sur la structure (1).

15. Etrogneuse selon la revendication 8 caractérisée en ce que chaque couteau (23) est monté à l'extérieur du plateau tournant (6), et que le système de commande du couteau (23) comporte un vérin (14) solidaire d'un mandrin (15) porte-couteau, ledit vérin (14) coopérant avec le dispositif à came dont la came (13) est portée par la structure (1).

16. Etrogneuse selon la revendication 15 caractérisée en ce que le vérin (14) comporte un corps (47), dans lequel coulisse une tige (49) solidaire d'un galet de commande (50) en contact avec la came (13), ladite tige (49) porte un piston (51) coulissant dans le corps (47) et poussé par un ressort de rappel (48) monté dans le corps (47) et s'appuyant sur le fond (52) du corps (47) de manière à appuyer constamment le galet de commande (50) contre la came (13).

17. Etrogneuse selon l'une des revendications 15 et 16 caractérisée en ce que le vérin (14) est monté à l'extérieur de la couronne (32) du plateau tournant (6) au moyen d'une plaque intermédiaire (53) munie de deux lumières circulaires (54) qui coopèrent avec des moyens de fixation sur la couronne (32), afin d'obtenir un réglage de la position du vérin (14) par rapport au plateau tournant (6).

18. Etrogneuse selon l'une quelconque des revendications 4 à 17 caractérisée en ce que chaque ensemble de blocage en position du système de tenue de végétal correspondant comprend un doigt (19), dont l'axe est parallèle à l'arbre (35) de la poulie (7), et qui s'engage dans une encoche circulaire (55) aménagée sur la face supérieure (56) de la poulie (7) ; le doigt (19) étant porté par le plateau tournant (6) et actionné par un système à came (17) qui est porté par la structure (1).

19. Etrogneuse selon la revendication 18 caractérisée en ce que le doigt (19) est solidaire d'un vérin (18) actionné par le système à came dont la came (17) est portée par la structure (1), ledit vérin (18) étant porté par le support (9) de l'arbre (35) de la poulie (7).

20. Etrogneuse selon la revendication 19 caractérisée en ce que le vérin (18) comporte un corps (57) dans lequel coulisse une tige (62) solidaire d'un galet de commande (59) en contact avec la came (17), ladite tige (62) porte un piston coulissant dans le corps (57)et pressé par un ressort de rappel (58) monté dans le corps (57) et s'appuyant sur le fond dudit corps (57) de manière à appuyer constamment le galet de commande (59) contre la came (17).

21. Etrogneuse selon l'une quelconque des revendications 18 à 20 caractérisée en ce que l'encoche circulaire (55) comporte une face d'appui (60) du doigt (19) qui est inclinée par rapport à la face supérieure (56) de la poulie (7) de manière à avoir une pente d'engagement.

22. Etrogneuse selon l'une quelconque des revendications 8 à 21, caractérisée en ce qu'un couteau horizontal (61) est monté sur la structure (1) en sortie de la zone d'action de la courroie d'entraînement.

23. Procédé pour étêter des végétaux du type brocolis caractérisé en ce qu'il consiste:
- à disposer la tige de végétal sur un système de tenue de manière à ce que ladite tige soit sensiblement parallèle à l'axe dudit système de tenue, qui est monté sur un plateau tournant (6), supporté par une structure (1) d'une étrogneuse pour végétaux; l'axe du système de tenue étant sensiblement parallèle à l'axe du plateau tournant (6); ladite tige de végétal étant placée entre les mâchoires (42) des leviers (10) de la pince (8) du système de tenue de végétal immobilisé en rotation autour de son axe par l'ensemble de blocage en position de chargement, c'est-à-dire avec son ouverture d'engagement dirigée radialement vers l'extérieur du plateau tournant (6), les mâchoires (42) étant en position ouverte sous l'action du système de manoeuvre;
- à rapprocher les mâchoires (42) contre la tige du végétal sous l'action du système de manoeuvre de manière à tenir le végétal dans la pince (8);
- en ce que le végétal avec son système de tenue se déplacent avec le plateau tournant (6) jusqu'au début de la zone d'entraînement en rotation, et que simultanément l'ensemble de blocage laisse libre en rotation le système de tenue de végétal autour de son axe, sous l'action de la came (17);
- en ce que le végétal, son système de tenue et un couteau (23) associé à chaque système de tenue de végétal correspondant pénètrent dans la zone d'entraînement en rotation, et que simultanément une came (13) commande le mouvement du couteau (23) correspondant de manière à étêter le végétal pendant tout le déplacement du système de tenue dans cette zone, les fleurettes tombant sur un tapis roulant (25);
- à dégager et remonter le couteau (23) en fin de parcours dans la zone d'entraînement en rotation, et à commander un couteau horizontal (61) qui vient couper la/les fleurettes centrales de la tige;
- en ce que le végétal et son système de tenue sortent de la zone d'entraînement en rotation, et que sous l'action du système de manoeuvre, les mâchoires (42) s'ouvrent pour laisser tomber la tige restante sur un tapis roulant (26);
- en ce que l'ensemble de blocage en position vient immobiliser en rotation le système de tenue de végétal correspondant autour de son axe, sous l'action de la came (17), de façon à placer ledit système de tenue de végétal en position de chargement.

## Patentansprüche

1. Maschine zum Entstrunken von Gemüsen wie Broccoli, bestehend aus einem Tragteil (1), welches ein sich drehendes Plateau (6) abstützt, an welchem Halterungsvorrichtungen für das Gemüse montiert sind, dadurch gekennzeichnet, daß
- jede Gemüsehalterungsvorrichtung eine Achse aufweist, die im wesentlichen parallel ist zur Achse des sich drehenden Plateaus (6);
- jede Gemüsehalterungsvorrichtung sich frei um ihre Achse drehen kann, derart, daß sie von einer Drehmitnahmevorrichtung, die während eines Bruchteils jeder Umdrehung der sich drehenden Plattform (6) einwirkt, zu einer Drehbewegung um ihre Achse veranlaßt werden kann;
- jede Gemüsehalterungsvorrichtung einem Messer (23) zugeordnet ist, welches von dem drehbaren Plateau (6) getragen wird, wobei das genannte Messer (23) bezogen auf die Gemüsehalterungsvorrichtung drehfixiert ist,
- daß jedes Messer (23) durch ein Steuersysten an das in Rotation versetzte Gemüse herangeführt wird, um dieses durch einen entsprechenden Schnitt zu köpfen,
- daß jedes Messer (23) wirksam ist während die Rotationsmitnahmevorrichtung der Haltevorrichtung des jeweiligen Gemüsekopfes in Funktion ist.

2. Maschine zum Entstrunken nach Anspruch 1, dadurch gekennzeichnet, daß das Steuersystem des Messers (23) eine Nockenfolgesteuereinrichtung (13) aufweist, die von dem Tragteil (1) der Maschine getragen wird.

3. Maschine zum Entstrunken nach Anspruch 1, dadurch gekennzeichnet, daß jede Gemüsehalterungsvorrichtung mit einer Positionsblockiereinrichtung zusammenarbeitet, derart, daß nach demjenigen Bruchteil der Umdrehung des drehenden Plateaus (6), während dessen die Gemüsehalterungsvorrichtung ihrerseits zu einer Drehbewegung um ihre Achse veranlaßt wird, die Gemüsehalterungsvorrichtung in eine Beladeposition gebracht und in dieser Position gehalten wird, d.h. mit ihrer Eingriffsöffnung radial zur Außenseite des drehenden Plateaus (6) weist.

4. Maschine zum Entstrunken nach Anspruch 3, dadurch gekennzeichnet, daß jede Positionsblockiereinrichtung der entsprechenden Gemüsehalterungsvorrichtung direkt auf der Gemüsehalterungsvorrichtung montiert ist.

5. Maschine zum Entstrunken nach Anspruch 2, dadurch gekennzeichnet, daß die Trageinrichtung (1) folgende Teile trägt:
- eine vertikale Zentralwelle (27), die durch einen Getriebemotor (24) angetrieben ist und die fest verbunden ist mit dem drehbaren Plateau (6), das im wesentlichen horizontal angeordnet ist, wobei das genannte drehbare Plateau (6) die Gemüsehalterungsvorrichtungen mit vertikalen Achsen und die Steuerungseinrichtungen der Messer (23) trägt;
- die Nockenfolgescheibe (13) der Messer (23), die kreisförmig derart angeordnet ist, daß sie der radialen Position der Gemüsehalterungsvorrichtungen bezüglich des drehbaren Plateaus entspricht;
- die Drehmitnahmevorrichtung für die Gemüsehalterungsvorrichtungen.

6. Maschine zum Entstrunken nach Anspruch 5, dadurch gekennzeichnet,
- daß die Zentralwelle (27) durch zwei Lager, ein unteres Lager (28) und ein oberes Lager (29) gehaltert ist, welche am Tragteil (1) befestigt sind;
- daß das drehbare Plateau (6) durch eine Radnabe (30) gebildet ist, welche Arme (31) trägt, die untereinander durch einen im wesentlichen kreisförmigen Ring (32) verbunden sind, wobei sich jeder Arm (31) nach außen über den Ring (32) um einen Außenabschnitt (33) verlängert, welcher die entsprechende Gemüsehalterungsvorrichtung trägt.

7. Maschine zum Entstrunken nach Anspruch 6, dadurch gekennzeichnet, daß die Rotationsmitnahmevorrichtung für die Gemüsehalterungsvorrichtungen einen Mitnahmetreibriemen (4) umfaßt, der durch eine Treibscheibe (2) mit vertikaler Achse, die mit einem Drehzahlvariator (3) verbunden ist, in Bewegung versetzt wird und der sich tangential an der Außenseite von Scheiben (7) andrückt, wobei jede Scheibe (7) fest mit der entsprechenden Gemüsehalterungsvorrichtung verbunden ist und das Sichanlegen des Treibriemens an eine Scheibe (7) in dem Moment erfolgt, in dem diese Scheibe (7), die durch das drehbare Plateau (6) mitgenommen wird, in den Wirkungsbereich des Treibriemens (4) gelangt, der wiederum dem Bruchteil jeder Umdrehung entspricht, währenddessen die entsprechende Gemüsehalterungsvorrichtung sich um ihre Achse drehen soll.

8. Maschine zum Entstrunken nach Anspruch 7, dadurch gekennzeichnet, daß die Treibscheibe (2) im Innern des Treibriemens (4) angeordnet ist, der durch Losrollen (5) in Spannstellung gehaltert wird, die symmetrisch bezüglich der Längsebene der Maschine angeordnet sind, welche durch die Achse des drehbaren Plateaus (6) und die Achse der Treibscheibe (2) verläuft, wobei die beiden Losrollen (5) mit vertikaler Achse im Tragteil (1) außerhalb des kreisförmigen Bewegungswegs der Gemüsehalterungsvorrichtungen montiert sind, derart, daß ihr Abstand zur Treibscheibe (2) parallel zur Längsebene so bestimmt ist, daß die Rotationsmitnahme der Gemüsehalterungsvorrichtungen um ihre jeweilige Achse während des gewünschten Bruchteils einer Umdrehung des sich drehenden Plateaus (6) stattfindet.

9. Maschine zum Entstrunken nach Anspruch 8, dadurch gekennzeichnet, daß jede Gemüsehalterungsvorrichtung eine Zange (8) umfaßt, die von einer Scheibe (7) mittels Stützpfeilern (34) getragen wird, wobei die Scheibe (7) fest mit einer Welle (35) verbunden ist, die auf ihrer der Seite der Zange (8) abgelegenen Oberseite angeordnet ist und wobei die Welle (35) im sich drehenden Plateau (6) mit Hilfe eines Lagerteils (9) montiert ist, welches vom Ende (33) des entsprechenden Arms (31) getragen wird, derart, daß die Welle (35) sich frei um ihre Achse drehen kann.

10. Maschine zum Entstrunken nach Anspruch 9, dadurch gekennzeichnet, daß das Lagerteil (9) zwei Haltelager für die Welle (35) umfaßt.

11. Maschine zum Entstrunken nach einem der Ansprüche 8 und 9, dadurch gekennzeichnet, daß der Treibriemen (4) wenigstens einen trapezförmigen Treibriemen umfaßt, der in eine trapezförmige Hohlkehle (37) der Treibscheibe (2) und eine trapezförmige Hohlkehle (38) jeder der Losrollen (5) sowie in eine trapezförmige Hohlkehle (36) jeder der Scheiben (7) eingreift.

12. Maschine zum Entstrunken nach Anspruch 9, dadurch gekennzeichnet, daß die Zange (8) ein System (10) mit zwei Hebeln umfaßt, die symmetrisch bezüglich einer durch die Achse der Scheibe (7) gehenden Ebene angeordnet sind, wobei jeder Hebel (10) im Körper (39) der Zange (8) mit Hilfe einer im wesentlichen vertikalen Schwenkachse (40) montiert ist, und zwar derart, daß sich ein großer Hebelarm (41) ergibt, dessen Ende einen Klemmbacken (42) zum Ergreifen des Gemüses trägt, und ein kleiner Hebelarm (43), dessen Ende durch einen Zapfen (44) gebildet wird, der in die Tasche (45) einer Kurvenscheibe (11) eingreift, welche von einem Handhabungssystem betätigt wird, so daß bei einer Translation der Kurvenscheibe (11) entlang ihrer Achse die entsprechende Fläche der Tasche (45) auf den Zapfen (44) einwirkt, um den kleinen Hebelarm (43) des Hebels (10) um seine Schwenkachse (44) zu verdrehen zum Zwecke einer Annäherung der beiden Klemmbacken (42) der beiden Hebel aneinander.

13. Maschine zum Entstrunken nach Anspruch 12, dadurch gekennzeichnet, daß das Handhabungssystem aus einem doppelt wirkenden pneumatischen Zylinder (12) besteht, der von einer Hydraulikleitung (46) versorgt wird, die an einen drehbaren Anschluß (16) angeschlossen ist.

14. Maschine zum Entstrunken nach Anspruch 13, dadurch gekennzeichnet, daß der Versorgungskreis des pneumatischen Zylinders (12) einen elektrisch betätigten Verteiler (20) umfaßt, der von einem Unterbrecher (22) betätigt wird, der von einem Nocken (21) gesteuert wird, der am Tragteil (1) montiert ist.

15. Maschine zum Entstrunken nach Anspruch 8, dadurch gekennzeichnet, daß jedes Messer (23) außerhalb des drehbaren Plateaus (6) montiert ist und daß das Steuersystem des Messers (23) ein mit einem das Messer tragenden Mandrin versehenes Stellglied umfaßt, welches mit einer Nockenfolgesteuereinrichtung zusammenwirkt, deren Steuerkurve (13) vom Tragteil (1) getragen wird.

16. Maschine zum Entstrunken nach Anspruch 15, dadurch gekennzeichnet, daß das Stellglied (14) einen Körper (47) umfaßt, in welchem eine Kolbenstange (49) gleitet, die eine Steuerscheibe (50) trägt, die in Kontakt mit der Steuerkurve (13) steht, wobei die Kolbenstange (49) einen Kolben (51) trägt, der im Körper (47) gleitet und unter der Wirkung einer Rückstellfeder (48) steht, die im Körper (47) montiert ist und sich auf dessen Boden (52) abstützt, um auf diese Weise die Steuerscheibe (50) ständig an die Steuerkurve (13) anzudrücken.

17. Maschine zum Entstrunken nach Anspruch 15 und 16, dadurch gekennzeichnet, daß das Stellglied (14) außerhalb des Randes (32) des drehbaren Plateaus (6) mit Hilfe einer Zwischenplatte (53) montiert ist, welche mit zwei kreisbogenförmigen Langlöchern (54) versehen ist, die mit Befestigungseinrichtungen auf dem Rand (32) zusammenwirken, um eine Regelung der Position des Stellgliedes (14) bezüglich des drehbaren Plateaus (6) zu erhalten.

18. Maschine zum Entstrunken nach einem Ansprüche 4 bis 17, dadurch gekennzeichnet, daß jede Positionsblockiereinrichtung der entsprechenden Gemüsehalterungsvorrichtung einen Zapfen (19) enthält, dessen Achse parallel zur Welle (35) der Scheibe (7) ist und der in eine kreisbogenförmige Nut (55) auf der Oberseite (56) der Scheibe (7) eingreift, wobei der Zapfen (19) vom sich drehenden Plateau (6) getragen und durch eine Nockensteuereinrichtung (17) betätigt wird, die vom Tragteil (1) getragen wird.

19. Maschine zum Entstrunken nach Anspruch 18, dadurch gekennzeichnet, daß der Zapfen (19) fest mit einem Stellglied (18) verbunden ist, welches betätigt wird durch das Nockensteuersystem, dessen Steuerkurve (17) vom Tragteil (1) getragen wird, wobei das Stellglied (18) seinerseits vom Lagerteil (9) der Welle (35) der Scheibe (7) getragen wird.

20. Maschine zum Entstrunken nach Anspruch 19, dadurch gekennzeichnet, daß das Stellglied (18) einen Körper (57) umfaßt, in welchem eine Kolbenstange (32) gleitet, an der eine Steuerscheibe (59) befestigt ist, die in Kontakt mit der Steuerkurve (17) steht, wobei die Kolbenstange (62) einen Kolben trägt, der im Körper (57) gleitet und durch eine Rückstellfeder (58) im Körper (57) zusammengedrückt wird und sich am Boden des Körpers (57) derart abstützt, daß die Steuerscheibe (59) ständig an die Kurvenscheibe (17) angedrückt wird.

21. Maschine zum Entstrunken nach einem der Ansprüche 18 bis 20, dadurch gekennzeichnet, daß die kreisbogenförmige Nut (55) eine Abstützfläche (60) für den Zapfen (19) aufweist, die bezüglich der Oberfläche (56) der Scheibe (7) geneigt ist, um eine Eingreifschräge zu erhalten.

22. Maschine zum Entstrunken nach einem der Ansprüche 8 bis 21, dadurch gekennzeichnet, daß am Ausgang der Betätigungszone des Treibriemens ein horizontales Messer (61) am Tragteil (1) montiert ist.

23. Verfahren zum Köpfen von Gemüsen wie Broccoli, dadurch gekennzeichnet,
- daß der Strunk eines Gemüsekopfs in einer Haltevorrichtung derart angeordnet wird, daß der Strunk im wesentlichen parallel zur Achse der Halterungsvorrichtung angeordnet ist, die auf einem drehbaren Plateau (6) montiert ist, die ihrerseits von einem Halterungsteil (1) einer Maschine zum Entstrunken von Gemüsen getragen wird, wobei die Achse der Halterungsvorrichtung im wesentlichen parallel zur Achse des drehbaren Plateaus (6) verläuft und der Strunk des Gemüsekopfs zwischen den Klemmbacken der Hebel (10) der Zange (8) der Gemüsehalterungsvorrichtung eingebracht wird, welche in der Beladeposition, d.h. in der Stellung, in der die Eingriffsöffnung radial zur Außenseite des drehbaren Plateaus (6) gerichtet ist und die Klemmbacken (42) unter der Wirkung des Handhabungssystems in der geöffneten Position sind, durch eine Positionsblockiereinrichtung gegen ein Verdrehen um ihre Achse immobilisiert ist;
- daß die Klemmbacken (42) gegen den Strunk des Gemüsekopfs unter der Wirkung des Handhabungssystems zum Zwecke der Halterung des Gemüsekopfs in der Zange (8) angenähert werden;
- daß der Gemüsekopf in seiner Haltevorrichtung mit dem drehbaren Plateau (6) bis zur Rotationsmitnahmezone verschoben wird und daß gleichzeitig die Blockiervorrichtung die Gemüsehalterungsvorrichtung bezüglich einer Rotation um ihre Achse unter der Wirkung der Steuerkurve (17) freigibt;
- daß, während der Gemüsekopf, seine Halterungsvorrichtung und ein Messer (23), welches jeder Gemüsehalterungsvorrichtung zugeordnet ist, in die Rotationsmitnahmezone eindringen, gleichzeitig eine Steuerkurve (13) die Bewegung des Messers (23) derart steuert, daß der Gemüsekkopf während der Verschiebung der Halterungsvorrichtung in dieser Zone geköpft wird und die einzelnen Röschen auf ein Laufband (25) fallen;
- daß das Messer (23) am Ende des Weges in der Rotationsmitnahmezone außer Eingriff und zurückbewegt wird und ein horizontales Messer (61) betätigt wird, welches das oder die zentralen Röschen am Strunk abschneidet;
- der Gemüsekopf und seine Halterungsvorrichtung aus der Rotationsmitnahmezone herausbewegt werden und daß unter der Wirkung eines Manövriersystems die Klemmbacken (42) sich öffnen und den verbleibenden Strunk auf das Rollband (26) fallen lassen;
- und daß die Positionsblockiereinrichtung das Gemüsehalterungssystem gegen Verdrehen um seine Achse unter der Wirkung einer Steuerkurve (17) sichert, um die Gemüsehalterungsvorrichtung in die Beladeposition zu bringen.

## Claims

1. Trimmer for vegetables of the broccoli type, which is constituted by a structure (1) supporting a rotating plate (6) in which are mounted vegetable holding systems, characterized in that:
- each vegetable holding system comprises its axis which is substantially parallel to the axis of the rotating plate (6);
- each vegetable holding system is free to rotate about its axis so as to be capable of being propelled with a movement of rotation about that axis by a rotation driving device acting during a portion of each revolution of the rotating plate (6);
- each vegetable holding system is associated with a cutter (23) which is held by the rotation plate (6), said cutter (23) being fixed in rotation with regard to the vegetable holding system;
- each cutter (23) is brought by a control system against said vegetal propelled with a rotation movement so as to remove heads from it at the required section;
- each cutter (23) acting during the action of the rotation driving device of the corresponding vegetable holding system.

2. Trimmer according to claim 1, characterized in that the control system of the cutter (23) comprises a cam device (13), said cam (13) being borne by the structure (1) of the machine.

3. Trimmer according to claim 1, characterized in that each vegetable holding system co-operates with an assembly for locking in position, so that after the portion of revolution of the rotating plate (6) during which the vegetable holding system is itself propelled with a movement of rotation about its axis, the vegetable holding system is placed in loading position and held in this position, that is to say with its opening for insertion directed radially towards the outside of the rotating plate (6).

4. Trimmer according to claim 3, characterized in that each assembly for locking in position the corresponding vegetable holding system is mounted directly onto said vegetable holding system.

5. Trimmer according to claim 2, characterized in that the structure (1) supports:
- a vertical central post (27) which is driven by a motor with step-down gear (24), and which is attached to the substantially horizontal rotating plate (6), said rotating plate (6) bearing the vegetable holding systems having vertical axes, and the control systems of the cutters (23);
- the cam (13) of the cutters (23), which is arranged circularly so as to correspond to the radial position with respect to the rotating plate (6) of the vegetable holding systems;
- the device for driving in rotation of the vegetable holding systems.

6. Trimmer according to claim 5, characterized in that:
- the central post (27) is held by two bearings, a lower bearing (28), an upper bearing (29) which are fixed to the structure (1);
- the rotating plate (6) is constituted by a hub (30) bearing arms (31) connected to one another by a ring (32) of substantially circular shape, each arm (31) being extended to the outside of this ring (32) by an end (33) supporting the corresponding vegetable holding system.

7. Trimmer according to claim 6, characterized in that the device for driving in rotation the vegetable holding systems comprises a drive belt (4) which is set in motion by a driving pulley (2) having a vertical axis and connected to a motor with step-down gear (3), said belt coming to press tangentially against the outside of pulleys (7), each pulley (7) being attached to the corresponding vegetable holding system; said drive belt (4) coming to press against a pulley (7) at the moment when this pulley (7), which is driven by the rotating plate (6), enters the zone of action of the drive belt (4), which corresponds to the portion of each revolution during which the corresponding vegetable holding system has to turn about its axis.

8. Trimmer according to claim 7, characterized in that the driving pulley (2) is set inside the drive belt (4), which is held in place by two idler pulleys (5) arranged symmetrically with respect to the longitudinal plane of the machine passing through the axis of the rotating place (6) and through the axis of the driving pulley (2), these two idler pulleys (5) having vertical axes being mounted in the structure (1) outside the range of circular movement of the vegetable holding systems, so that their distance from the driving pulley (2) in the direction parallel with the longitudinal plane is determined so that the driving in rotation of the vegetable holding systems about their axes is performed during the required portion of revolution of the rotating plate (6).

9. Trimmer according to claim 8, characterized in that each vegetable holding system comprises a grip (8) carried by a pulley (7) by means of supporting columns (34), said pulley (7) being securely attached to a shaft (35) arranged at its upper part on the other side from the grip (8); said shaft (35) being mounted in the rotating plate (6) by means of a bracket (9) carried by the end (33) of the corresponding arm (31), so that the shaft (35) can rotate freely about its axis.

10. Trimmer according to claim 9, characterized in that the bracket (9) comprises two bearings for holding the shaft (35).

11. Trimmer according to any one of claims 8 and 9, characterized in that the drive belt (4) comprises at least one trapezoidal belt, which is engaged in a trapezoidal groove (37) of the driving pulley (2) and in a trapezoidal groove (38) of each of the two idler pulleys (5) of the drive device, and also in a trapezoidal groove (36) of each of the pulleys (7) concerned.

12. Trimmer according to claim 9, characterized in that the grip (8) comprises a system of two levers (10) arranged symmetrically with respect to a plane passing through the axis of the pulley (7), each lever (10) being mounted in the body (39) of the grip (8) by means of a substantially vertical articulation pin (40), so as to have a large side (41) the end of which bears a jaw (42) for gripping the vegetable and a small side (43) the end of which is constituted by a toe (44) which is engaged in the notch (45) of a cam (11) actuated by an operating system, so that a translation of the cam (11) along its own axis acts on the toe (44) through the corresponding face of the notch (45), so as to cause the small side (43) of the lever (10) to turn about its articulation pin (40), in order to move the two jaws (42) of the two levers (10) apart or together with respect to one another.

13. Trimmer according to claim 12, characterized in that the operating system is constituted by a double-acting pneumatic jack (12) fed by a pipe (46) connected to a swivel joint (16).

14. Trimmer according to claim 13, characterized in that the feed system of the pneumatic jack (12) comprises an electrically controlled distributor (20) actuated by a switch (22) controlled by a cam (21) mounted on the structure (1).

15. Trimmer according to claim 8, characterized in that each cutter (23) is mounted on the outside of the rotating plate (6), and in that the control system of the cutter (23) comprises a jack (14) securely attached to a cutter-holding chuck (15), said jack (14) co-operating with the cam device, the cam (13) of which is borne by the structure (1).

16. Trimmer according to claim 15, characterized in that the jack (14) comprises a body (47) in which slides a shank (49) attached to a control roller (50) in contact with the cam (13), said shank (49) carries a piston (51) sliding in the body (47) and pushed by a return spring (48) mounted in the body (47) and pressing against the bottom (52) of the body (47) so as to press the control roller (50) constantly against the cam (13).

17. Trimmer according to any one of claims 15 and 16, characterized in that the jack (14) is mounted on the outside of the ring (32) of the rotating plate (6) by means of an intermediate plate (53) provided with two circular openings (54) which co-operate with fixing means on the ring (32), so as to obtain an adjustment of the position of the jack (14) with respect to the rotating plate (6).

18. Trimmer according to any one of claims 4 to 17, characterized in that each assembly for locking in position of the corresponding vegetable holding system comprises a peg (19), the axis of which is parallel with the shaft (35) of the pulley (7), and which engages in a circular notch (55) provided in the upper face (56) of the pulley (7); the peg (19) being borne by the rotating plate (6) and actuated by a cam system (17) which is borne by the structure (1).

19. Trimmer according to claim 18, characterized in that the peg (19) is attached to a jack (18) actuated by the cam system, the cam (17) of which is borne by the structure (1), said jack (18) being borne by the bracket (9) of the shaft (35) of the pulley (7).

20. Trimmer according to claim 19, characterized in that the jack (18) comprises a body (57) in which slides a shank (62) attached to a control roller (59) in contact with the cam (17), said shank (62) carries a piston sliding in the body (57) and pressed by a return spring (58) mounted in the body (57) and pressing against the bottom of said body (57) so as to press the control roller (59) constantly against the cam (17).

21. Trimmer according to any one of claims 18 to 20, characterized in that the circular notch (55) comprises a face (60) for support of the peg (19), which is inclined with respect to the upper face (56) of the pulley (7) so as to have a slope for engagement.

22. Trimmer according to any one of claims 8 to 21, characterized in that a horizontal cutter (61) is mounted on the structure (1) at the exit from the zone of action of the drive belt.

23. Method for removing heads from vegetables of the broccoli type, characterized in that it consists:
- in placing the vegetable stem on a holding system so as said stem is substantially parallel to the axis of said holding system which is mounted on a rotating plate (6) held by a trimmer structure (1) for vegetables; the axis of the holding system being substantially parallel to the axis of the rotating plate (6), said vegetable stem being provided between the jaws (42) of the levers (10) of the grip (8) of the vegetable holding system locked in rotation about its axis by the assembly for locking in loading position, that is to say with its opening for insertion directed radially towards the outside of the rotating plate (6), the jaws (42) being in open position under the action of the operating system;
- in bringing the jaws (42) together against the vegetable stem under the action of the operating system so as to hold the vegetable in the grip (8);
- in the vegetable and its holding system moving with the rotating plate (6) as far as the start of the zone of driving in rotation, and in the locking assembly simultaneously leaving the vegetable holding system free to rotate about its axis, under the action of the cam (17);
- in the vegetable, its holding system and a cutter (23) associated with each corresponding vegetable holding system entering the zone of driving in rotation, and in the cam (13) simultaneously controlling the movement of the corresponding cutter (23) so as to remove heads from the vegetable throughout the movement of the holding system in this zone, the florets falling onto a conveyor belt (25);
- in moving the cutter (23) clear and raising it again at the end of travel through the zone of driving in rotation, and in controlling a horizontal cutter (61) which comes to cut off the central floret or florets from the stem;
- in the vegetable and its holding system leaving the zone of driving in rotation and in the jaws (42) opening under the action of the operating system, so as to allow the remaining stem to fall onto a conveyor belt (26);
- in the assembly for locking in position coming to lock the vegetable holding system in rotation about its axis, under the action of the cam (17), so as to place said vegetable holding system in loading position.
